# EUROPEAN PATENT SPECIFICATION

(11) **EP 2 863 122 B1**
(45) Date of publication and mention of the grant of the patent: **09.01.2019**
(21) Application number: 13806758.2
(22) Date of filing: 14.06.2013
(51) Int. Cl.: F23G 5/50, C02F 11/06, F23C 10/28, F23G 5/027, F23G 5/16, F23G 5/30, F23G 7/04, F23C 10/10, F23G 7/00

(54) **CIRCULATING-TYPE MULTI-LAYER FURNACE**
MEHRSCHICHTIGER ZIRKULATIONSOFEN
FOUR MULTICOUCHE DU TYPE CIRCULANT

(30) Priority: 18.06.2012 JP 2012137091
(43) Date of publication of application: 22.04.2015
(73) Proprietor: Metawater Co., Ltd., Tokyo 101-0041 (JP)
(72) Inventor: TAKESHITA, Tomoyuki, Tokyo 101-0041 (JP); HATTORI, Shusaku, Tokyo 101-0041 (JP); MIZUNO, Yoichiro, Tokyo 101-0041 (JP); INOUE, Masanobu, Tokyo 101-0041 (JP)
(74) Representative: Naylor, Matthew John
(86) International application number: PCT/JP2013/066511
(87) International publication number: WO 2013/191109

(56) References cited:
- JP-A- H08 219 413
- JP-A- 2003 042 422
- JP-A- 2004 181 322
- JP-A- 2004 279 015
- JP-A- 2009 139 043
- JP-A- 2009 139 043
- JP-A- 2009 229 042

## Description

### Field

The present invention relates to a circulating-type multi-layer furnace including a circulation unit incinerating a sludge while feeding air which causes a flowing medium to be circulated, and a post-combustion unit feeding a secondary air and a tertiary air to a thermal decomposition gas from the circulation unit and causing the secondary air and the tertiary air to be subjected to perfect combustion.

### Background

As disclosed in Patent Literature 1, the circulating-type multi-layer furnace includes a circulation unit in which a flowing medium made of silica sand or the like filled in a riser is flown with a flowing air, the flowing medium accompanied with a combustion exhaust gas and exhausted from the riser is collected by a cyclone, and a waste is incinerated while being circulated to the riser's lower portion via a downcomer. Some circulating-type multi-layer furnaces include an auxiliary combustion unit, at their downstreams, for ensuring perfect combustion in the combustion exhaust gas. The circulating-type multi-layer furnace of this type is used for a incineration process for a waste such as a sewage sludge or the like because wastes varying in water content or produced heat amount or the like can be incinerated stably.

As disclosed in Patent Literature 2, which shows the features specified in the preamble of claim 1, some circulating-type multi-layer furnaces include a circulation unit incinerating a sludge by circulating a flowing medium to feed a fuel and a primary air, and a post-combustion unit being disposed at a downstream to the circulation unit and conducting a perfect combustion by feeding a secondary air and a tertiary air to the combustion exhaust gas from the circulation unit. The circulation unit of the circulating-type multi-layer furnace of this type is configured to decompose an N₂O and conduct a perfect combustion of an unincinerated component by conducting a restrained combustion at a temperature lower than that of the above-described circulating-type multi-layer furnace to restrain an amount of N₂O which is a greenhouse gas and forming a high-temperature zone in a post-combustion unit at a downstream.

Conventional circulating-type multi-layer furnace feeds air to the circulation unit and the post-combustion unit separately by a total amount necessary for a perfect combustion corresponding to an injected sludge amount at an optimum ratio for restrained combustion in the circulation unit and a perfect combustion in the post-combustion unit. In some cases, the circulating-type multi-layer furnace of this type is forced to be stopped after a low load operation because the primary air amount which should be fed to the circulation unit is lower than minimum primary air amount in a case where an amount of sludge to be incinerated decreases per unit time. In a method adapted for this case, the circulating-type multi-layer furnace is stopped, a stock of sludge is increased until the normal operation becomes possible in which the primary air amount to be fed to the circulation unit is equal to or larger than the minimum primary air amount, and then, the operation of the circulating-type multi-layer furnace is restarted.

### Citation List

### Patent Literatures

Patent Literature 1: Japanese Laid-open Patent Publication No. 2001-263634
Patent Literature 2: Japanese Laid-open Patent Publication No. 2009-139043

### Summary

### Technical Problem

However, the above-described method was inefficient timewise because a setup operation for the circulating-type multi-layer furnace was extremely onerous and quite time-consuming. Furthermore, since a temperature elevation is necessary once again for the furnace which has been cooled down, and since the temperature elevation requires a vast amount of auxiliary fuel, the above-described method was extremely inefficient in terms of a consumption amount of the auxiliary fuel.

Although a method avoiding a stoppage of the circulating-type multi-layer furnace may be configured by not causing the primary air amount fed to the circulation unit to be lower than the minimum primary air amount by complementing a shortfall of the injected sludge amount with an auxiliary fuel, this method was also inefficient since the consumption amount of the auxiliary fuel increased in this case.

The present invention has been made in view of the above and an object of the present invention is to provide a circulating-type multi-layer furnace according to claim 1, capable of avoiding a stoppage of the circulating-type multi-layer furnace in a case where the circulating-type multi-layer furnace shifts from a normal operation to a low load operation and also capable of maintaining the operation without increasing the consumption amount of the auxiliary fuel per a unit sludge disposal amount.

### Solution to Problem

In order to solve the above problems and to attain the object, according to an aspect of the present invention, there is provided a circulating-type multi-layer furnace according to claim 1.

According to another aspect of the present invention, there is provided the circulating-type multi-layer furnace, in which, in the second control, the air equal to the minimum air flow amount, required for circulating the flowing medium in the circulation unit, of the air in the air flow amount required for the perfect combustion is fed to the circulation unit, and the rest of the air is fed to the post-combustion unit.

### Advantageous Effects of Invention

The circulating-type multi-layer furnace according to the present invention is capable of preventing the circulating-type multi-layer furnace from being stopped even in a case of an operation shifting from a normal operation to a low load operation and maintaining the operation without increasing g a consumption amount of an auxiliary fuel to be consumed per unit sludge disposal amount.

### Brief Description of Drawings

FIG. 1 is a schematic view illustrating a configuration of a circulating-type multi-layer furnace according to an embodiment of the present invention.
FIG. 2A is a view explaining an example of change, by a controller shown in FIG. 1, in a fuel consumption amount per unit incineration amount relative to an incineration amount per unit time.
FIG. 2B is a view explaining an example of change, by the controller shown in FIG. 1, in an air ratio relative to incineration amount per unit time.
FIG. 2C is a view explaining an example of change, by the controller shown in FIG. 1, in a primary air flow amount relative to incineration amount per unit time.
FIG. 2D is a view explaining an example of change, by the controller shown in FIG. 1, in a temperature at an outlet of a circulation unit relative to incineration amount per unit time.

### Description of Embodiments

Hereinafter, embodiments carrying out the present invention will be described with reference to the attached drawings.

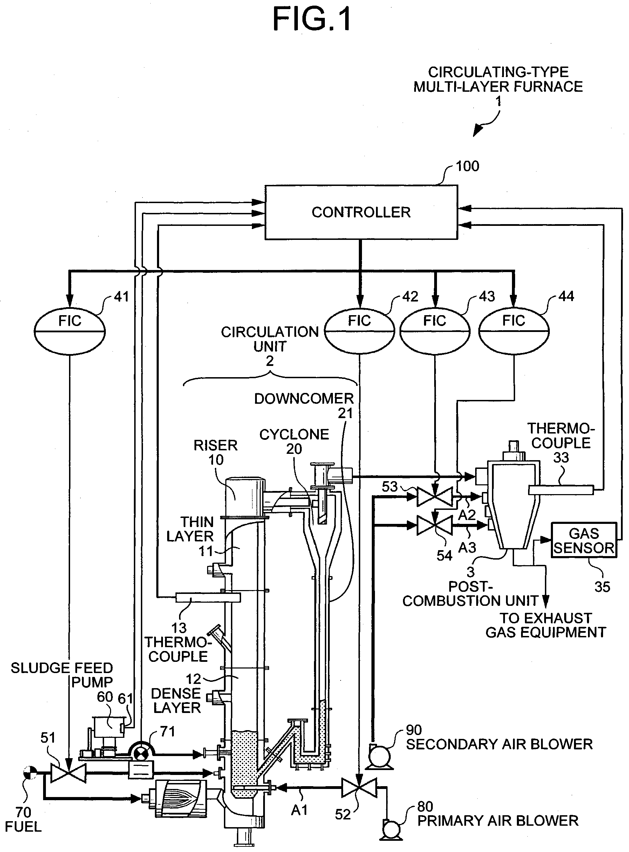

FIG. 1 is a view illustrating a configuration of a circulating-type multi-layer furnace according to an embodiment of the present invention. As shown in FIG. 1, a circulating-type multi-layer furnace 1 includes a circulation unit 2, and a post-combustion unit 3 provided at a downstream to the circulation unit 2. The circulation unit 2 has a riser 10, a cyclone 20, and a downcomer 21. The riser 10 assumes an approximate cylindrical shape. Formed in the furnace are a thin layer 11 at an upper portion and a particle trap portion which is called a dense layer 12 for a filled flowing medium such as silica sands at a lower portion.

The flowing medium filled at the lower portion of the riser 10 causes a sludge being injected and flown in the furnace by the flowing air (primary air) to be incinerated at approximately 600 to 900°C while stirring the sludge hard. The combustion exhaust gas (thermal decomposition gas) is fed to the cyclone 20 together with the flowing medium and subjected to a solid-gas separation. The flowing medium causes the sludge, while being circulated to the lower portion of the riser 10 via the downcomer 21, to be incinerated. A thermal decomposition gas subjected to solid-gas separation by the cyclone 20 is fed to the post-combustion unit 3 provided at a downstream.

Formed in the post-combustion unit 3 are a local high-temperature zone formed by a secondary air at an upstream and a perfect combustion zone formed by a tertiary air at a downstream. In the local high-temperature zone, N₂O in the thermal decomposition gas fed from the cyclone 20 is decomposed to reduce a greenhouse gas. An unincinerated component is subjected to perfect combustion in the perfect combustion zone.

The sludge is fed to the lower portion of the riser 10 by a sludge feed pump 60. The amount of fed sludge is transmitted to a controller 100 as an incineration amount. A fuel 70 is fed to the lower portion of the riser 10 by a valve 51 and a fuel consumption amount detector 71. The valve 51 is subjected to an opening-degree control by a fuel consumption amount adjustor (FIC) 41 so that a fuel consumption amount detected by the fuel consumption amount detector 71 becomes a control amount instructed by the controller 100.

A primary air A1, as a part of air in an air flow amount required for the perfect combustion of the sludge, is fed to the lower portion of the riser 10 from the primary air blower 80 via the valve 52. A secondary air A2 is fed from a secondary air blower 90 to an upper portion or a middle portion of the post-combustion unit 3 via a valve 53 to form the local high-temperature zone. A tertiary air A3 is fed to the middle portion or a lower portion of the post-combustion unit 3 from the secondary air blower 90 via a valve 54 to form the perfect combustion zone. The secondary air A2 and the tertiary air A3 constitute the rest of the air flow amount, of the air, required for the perfect combustion of the sludge.

A primary air flow amount adjustor 42 controls an opening degree of the valve 52 based on the result of detection by a primary air flow amount detector not shown in the drawings so that the primary air A1 in a control amount instructed by the controller 100 is fed to the dense layer 12 of the riser 10. A secondary air flow amount adjustor 43 controls an opening degree of the valve 53 based on the result of detection by an secondary air flow amount detector not shown in the drawings so that the secondary air A2 in a control amount instructed by the controller 100 is fed to the upper portion or the middle portion of the post-combustion unit 3. A tertiary air flow amount detector 44 controls an opening degree of the valve 54 based on the result of detection by a tertiary air flow amount detector not shown in the drawings so that the tertiary air A3 in a control amount instructed by the controller 100 is fed to the middle portion or the lower portion of the post-combustion unit 3.

The plurality of thermocouples 13 and 33 are in a distributed arrangement at the riser 10 and the post-combustion unit 3 respectively to measure intra-furnace temperatures respectively.

In the circulating-type multi-layer furnace 1, the riser 10 incinerates the sludge fed to the lower portion with the fuel 70 and the primary air A1 similarly fed from the lower portion. In the post-combustion unit 3, the thermal decomposition gas exhausted via the riser 10 and the cyclone 20 is incinerated in the local high-temperature zone with the secondary air A2 fed to the upper portion or the middle portion to decompose N₂O in the combustion exhaust gas, and similarly, an unincinerated component is subjected to perfect combustion with the tertiary air A3 at the perfect combustion zone in the lower portion.

The fuel consumption amount, the amount of sludge to be treated, the primary air flow amount, the secondary air flow amount, and the tertiary air flow amount are inputted to the controller 100 from the fuel consumption amount detector 71, the sludge feed flow amount detector 61, the primary air flow amount detector, the secondary air flow amount detector, and the tertiary air flow amount detector respectively, and the intra-furnace temperature of the riser 10 and the intra-furnace temperature of the post-combustion unit 3 are inputted to the controller 100 from the thermocouples 13 and 33 respectively. Inputted also to the controller 100 from the post-combustion unit 3 are exhaust gas component values such as O₂ or N₂O detected by the gas sensor 35. The controller 100 outputs the fuel consumption amount, the primary air flow amount, the secondary air flow amount, and the tertiary air flow amount, as control amounts, to the fuel consumption amount adjustor 41, the primary air flow amount adjustor 42, the secondary air flow amount adjustor 43, and the tertiary air flow amount detector 44 respectively.

In order to disperse the flowing medium in the furnace corresponding to an intra-furnace capacity of the riser 10 to obtain an appropriate flowing medium density as described above, the primary air flow amount which is equal to or greater than the constant value must be flown into the circulation unit 2. Therefore, the primary air flow amount to the circulation unit 2 will never be lower than a constant value of the primary air flow amount (minimum primary air flow amount).

The controller 100 conducts a first multi-layer incineration process with a first control, in which, in a case of a so called normal operation state where the primary air flow amount fed to the circulation unit 2 exceeds the minimum primary air flow amount for dispersing the flowing medium, a restrained combustion is conducted to control the fuel consumption amount per unit incineration amount of the sludge in the circulation unit 2 at a constant value and the primary air ratio is lower than one, and the secondary air A2 and the tertiary air A3 are fed to the post-combustion unit 3 to further incinerate the thermal decomposition gas from the circulation unit 2 for perfect combustion.

The controller 100 conducts a second multi-layer incineration process with a second control, in which, in a case of a so-called low load operation state where the primary air flow amount fed to the circulation unit 2 reaches the minimum primary air flow amount, the fuel consumption amount per unit incineration amount of the sludge is controlled to the same value as that of the first multi-layer incineration process, and the primary air ratio is increased gradually to a value of a total air ratio of the entire circulating-type multi-layer furnace 1 along with a decrease in the incineration amount of the sludge fed to the circulation unit 2 per unit time, and in the post-combustion unit 3, the secondary air ratio and the tertiary air ratio are decreased gradually to a value of zero along with a decrease in the incineration amount of the sludge fed to the circulation unit 2 per unit time. In a case where the primary air flow amount fed to the circulation unit 2 is of the minimum primary air flow amount and the primary air ratio fed to the circulation unit 2 is of the total air ratio, a process of complete combustion by the circulation unit is conducted in which the sludge is subjected to complete combustion only by the circulation unit 2.

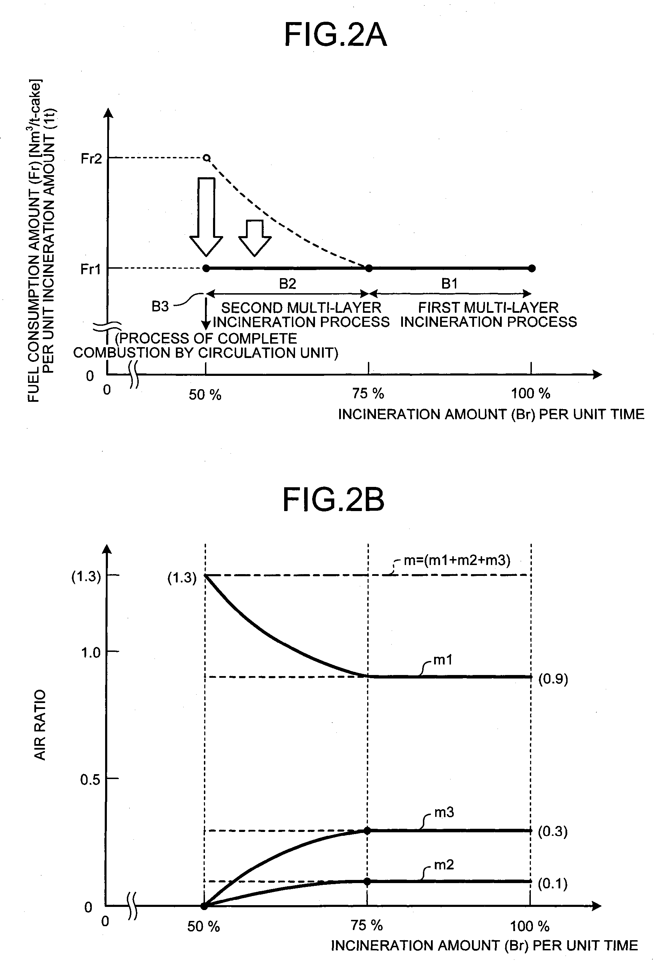

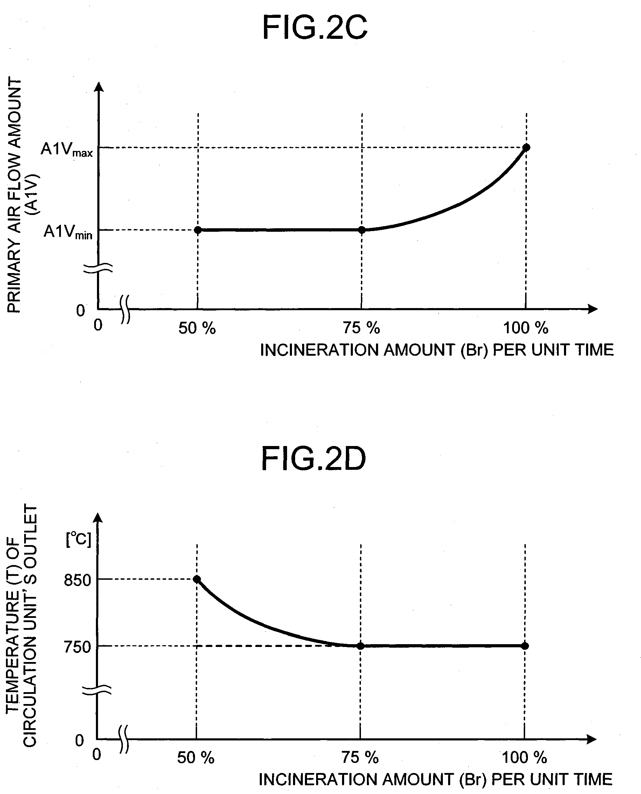

Herein a process of incineration control by the controller 100 will be explained more specifically with reference to FIGS. 2A, 2B, 2C, and 2D. FIG. 2A shows a fuel consumption amount Fr (Nm³/t-cake) per unit incineration amount (1t-cake) relative to an incineration amount Br, which is a load to the circulating-type multi-layer furnace 1, per unit time. FIG. 2B shows a change in air ratios (primary air ratio m1, secondary air ratio m2, tertiary air ratio m3, and total air ratio m) relative to the incineration amount Br per unit time. FIG. 2C shows a primary air flow amount A1V relative to the incineration amount Br per unit time, and FIG. 2D shows a change in a temperature T of the circulation unit's outlet relative to the incineration amount Br per unit time. The incineration amount Br at a load of 100% is, to be more specific, 100t/day for example. Therefore, the incineration amounts Br at a load of 75% and at a load of 50% are, to be more specific, 75 t/day and 50 t/day respectively for example.

As shown in FIG. 2C, the circulation unit 2 obtains the minimum primary air flow amount AlVmin at the 75% load of the incineration amount Br. The above-described first multi-layer incineration process B1 is conducted in a range from not lower than the minimum primary air flow amount AlVmin to the maximum primary air flow amount A1Vmax, i.e., between the load of 75% and the load of 100%. The above-described second multi-layer incineration process B2 is conducted in a range of the minimum primary air flow amount A1Vmin, i.e., between the load of 75% and the load of 50%, and in particular, the process 3 of complete combustion by the circulation unit is conducted at the load of 50%.

### (First Multi-Layer Incineration Process)

As shown in FIG. 2B, a process of restrained combustion is conducted in the range of the first multi-layer incineration process B1, in which the primary air ratio m1 at the circulation unit 2 is lower than one, for example, 0.9. The thermal decomposition gas from the circulation unit 2 is subjected to perfect combustion by controlling the secondary air ratio m2 at the post-combustion unit 3 to , for example, 0.1 and the tertiary air ratio m3 to, for example, 0.3. Then, the total air ratio of the entire circulating-type multi-layer furnace 1 is set at, for example, 1.3. In this state, N₂O gas is decreased since a great amount of sludge is processed, the circulation unit 2 is in the restrained combustion state, and the local high-temperature zone is formed in the post-combustion unit 3. Since the circulation unit 2 is in restrained combustion, as shown in FIG. 2D, the temperature T of the circulation unit's outlet is, for example, 750°C in the range of the first multi-layer incineration process B1. The temperature at the outlet of the post-combustion unit is, for example, 850°C.

As shown in FIG. 2A, in order to maintain the primary air ratio m1, the fuel consumption amount per unit incineration amount in the range of the first multi-layer incineration process B1 is a constant value Fr1 (for example, 20 (Nm³/t-cake)). Since the constant value Fr1 corresponds to a unit incineration amount, an absolute amount of the fuel consumption amount increases along with an increase in the incineration amount Br.

### (Second Multi-Layer Incineration Process and Process Of Complete Combustion by The Circulation Unit)

As shown in FIG. 2B, in the range of the second multi-layer incineration process B2, the primary air ratio m1 at the circulation unit 2 does not have to adhere to be lower than one, and is configured to increase monotonously along with a decrease in the load to become a value of the total air ratio m at the load of 50%. On the other hand, the secondary air ratio m2 and the tertiary air ratio m3 at the post-combustion unit 3 are configured to decrease monotonously along with a decrease in the load to become zero at the load of 50%. That is, at the load of 50%, only the circulation unit 2 conducts the perfect combustion and the post-combustion unit 3 serves as an auxiliary combustion unit ensuring the perfect combustion. Herein, if the primary air ratio m1 is controlled to 1.3 immediately and the secondary air ratio m2 and the tertiary air ratio m3 are controlled to zero immediately, i.e. controlled discontinuously at the load of 75% in the range of the second multi-layer incineration process B2, a lot of air is fed to the circulation unit 2 rapidly. In this case, since a surplus of air is fed to the circulation unit 2, the circulation unit 2 needs to increase the temperature of the surplus of the air, thus the fuel consumption increases inevitably. Therefore, in the range of the second multi-layer incineration process B2, the primary air ratio m1, the secondary air ratio m2, and the tertiary air ratio m3 are changed monotonously, continuously, and respectively along with a decrease in the load.

In a case where, in the range of the second multi-layer incineration process B2, the primary air ratio m1 is lower than 1.0 at the circulation unit 2, N₂O is reduced, similarly to the range of the first multi-layer incineration process B1, because the circulation unit 2 is in a state of restrained combustion and the local high-temperature zone is formed in the post-combustion unit 3. Along with a decrease in incineration of the sludge because the sludge to be incinerated decreases, if the primary air ratio m1 at the circulation unit 2 increases continuously and reaches, or exceeds, 1.0, the circulation unit 2 is in a state of combustion in which a temperature increases to a degree not reaching the perfect combustion. In this case, the temperature decreases in the post-combustion unit 3 than that at the first multi-layer incineration process B1, N₂O is to a degree lower than that is subjected to the perfect combustion in the circulation unit 2.

Although incineration ratios are not changed between the circulation unit 2 and the post-combustion unit 3 in the above-described first multi-layer incineration process B1 even though the load increases or decreases, an incineration ratio at the circulation unit 2 is not changed immediately but increased gradually along with a decrease in the load in the second multi-layer incineration process B2. Conducted at the load of 50% is the process 3, of complete combustion by the circulation unit, in which an incineration ratio is 100% at the circulation unit 2. As a result, as shown in FIG. 2D, the temperature T of the circulation unit's outlet increases from, for example, 750°C to 850°C along with approaching the load of 50% from the load of 75% in the range of the second multi-layer incineration process B2. A temperature at an outlet of the post-combustion unit is, for example, 700°C.

In a conventional circulating-type multi-layer furnace, a control maintaining the primary air ratio m1, the secondary air ratio m2, and the tertiary air ratio m3 was conducted regardless of the load similarly to the first multi-layer incineration process between the load of 100% and the load of 75% in the range between the load of 75% and the load of 50% as shown in a dotted line in FIG. 2B. As a result, as shown in a dotted line in FIG. 2D, the circulation unit 2 conducts a restrained combustion of controlling the temperature T of the circulation unit's outlet at 750°C in the range of the load of 75% and the load of 50%, thus the temperature at the outlet of the post-combustion unit was 850°C. However, as shown in FIG. 2C, since the primary air flow amount A1V as an absolute amount did not decrease along with a decrease in the load in the range between the load of 75% and the load of 50%, the primary air flow amount A1V is in surplus, and thus, as shown in a dotted line in FIG. 2A, a fuel consumption amount per unit incineration amount for conducting the restrained combustion, of the sludge, maintaining the primary air ratio m1 at 0.9 forcibly corresponding to the surplus of the air increased along with a decrease in the load (increase in the amount of the surplus primary air flow amount A1V).

By contrast, in the present embodiment, the primary air ratio m1 is increased along with a decrease in the load between the load of 75% and the load of 50% shown in FIG. 2B to shift from the restrained combustion (multi-layer incineration state) by the circulation unit 2 to a perfect combustion state of the sludge by the circulation unit 2 (increased temperature state), a state of increased surplus amount of the primary air flow amount A1V does not occur, thus a wasteful increase in the fuel can be restrained.

The above-described load of 75% or the load of 50% is a mere example and determined according to a capacity of the furnace of the circulation unit 2.

The present invention was described above with reference to the embodiment, and the technical scope of the present invention is not limited within the scope of the above-described embodiment. An ordinary skilled person of the art may understand that various change or modification can be made to the above-described embodiment within the technical scope of the present invention as defined in the appended claims.

### Reference Signs List

- 1: circulating-type multi-layer furnace
- 2: circulation unit
- 3: post-combustion unit
- 10: riser
- 11: thin layer
- 12: dense layer
- 13, 33: thermocouple
- 20: cyclone
- 21: downcomer
- 35: gas sensor
- 41: fuel consumption amount adjustor
- 42, 43, 44: air flow amount adjustor
- 51, 52, 53, 54: valve
- 60: sludge feed pump
- 61: sludge feed flow amount detector
- 70: fuel
- 71: fuel consumption amount detector
- 80: primary air blower
- 90: secondary air blower
- 100: controller
- A1: primary air
- A2: secondary air
- A3: tertiary air

## Claims

1. A circulating-type multi-layer furnace comprising:
a circulation unit (2) adapted for incinerating a sludge while feeding an air circulating a flowing medium;
a post-combustion unit (3) adapted for feeding an air to a thermal decomposition gas from the circulation unit (2) to conduct a perfect combustion, wherein
the circulating-type multi-layer furnace (1) is adapted to:
conduct a first control in which an air in an air flow amount being required for the perfect combustion and corresponding to an injected sludge amount is fed to the circulation unit (2) and the post-combustion unit (3) separately at a predetermined ratio,
wherein
the circulating-type multi-layer furnace (1) is adapted to:
conduct a second control in which, in a case where an air flow amount of the air to be fed to the circulation unit (2) is lower than an air flow amount required for circulating the flowing medium in the first control, an air equal to or larger than a minimum air flow amount required for circulating the flowing medium in the circulation unit (2), of the air in the air flow amount required for the perfect combustion is fed to the circulation unit (2) and a remaining amount of the air in the air flow amount required for the perfect combustion is fed to the post-combustion unit (3).

2. The circulating-type multi-layer furnace according to claim 1, wherein in the second control, the circulating-type multi-layer furnace is adapted to:
control the feed of an air equal to the minimum air flow amount required for circulating the flowing medium in the circulation unit (2), of the air in the air flow amount required for the perfect combustion fed to the circulation unit (2), and to feed a remaining amount of the air in the air flow amount required for the perfect combustion to the post-combustion unit (3).

3. The circulating-type multi-layer furnace according to claim 1 or 2, wherein the circulating-type multi-layer furnace is adapted to,
in the first control,
in the circulation unit, conduct a restrained combustion to control a fuel consumption amount per unit incineration amount of the sludge at a constant value, a primary air ratio being lower than one, the primary air being fed to the circulation unit, and,
conducting a perfect combustion to feed a secondary air and a tertiary air to the post-combustion unit to further incinerate a thermal decomposition gas from the circulation unit,
in the second control,
in the circulation unit, control the fuel consumption amount per unit incineration amount of the sludge to the same value as that of the first control, the primary air ratio being increased gradually to a value of a total air ratio of the entire circulating-type multi-layer furnace along with a decrease in the incineration amount of the sludge fed to the circulation unit per unit time, and
in the post-combustion unit, decreasing gradually the secondary air ratio and the tertiary air ratio to a value of zero along with a decrease in the incineration amount of the sludge fed to the circulation unit per unit time.

## Patentansprüche

1. Mehrschichtiger Zirkulationstyp-Ofen, umfassend:
eine Zirkulationseinheit (2), die für ein Veraschen eines Schlamms bei gleichzeitigem Zuführen einer Luft, die ein strömendes Medium zirkulieren lässt, ausgelegt ist;
eine Nachverbrennungseinheit (3), die für ein Zuführen von Luft in ein thermisches Zersetzungsgas aus der Zirkulationseinheit (2) ausgelegt ist, um eine vollkommene Verbrennung durchzuführen,
wobei der mehrschichtige Zirkulationstyp-Ofen (1) für Folgendes ausgelegt ist:
Durchführen einer ersten Steuerung, bei der eine Luft in einer Luftstrommenge, die für die vollkommene Verbrennung erforderlich ist und einer injizierten Schlammmenge entspricht, der Zirkulationseinheit (2) und der Nachverbrennungseinheit (3) separat in einem vorbestimmten Verhältnis zugeführt wird,
wobei der mehrschichtige Zirkulationstyp-Ofen (1) für Folgendes ausgelegt ist:
Durchführen einer zweiten Steuerung, bei der in einem Fall, in dem eine Luftstrommenge der der Zirkulationseinheit (2) zuzuführenden Luft niedriger als eine Luftstrommenge ist, die für ein Zirkulieren des strömenden Mediums bei der ersten Steuerung erforderlich ist, eine Luft, die gleich oder größer als eine minimale Luftstrommenge, die für ein Zirkulieren des strömenden Mediums in der Zirkulationseinheit (2) erforderlich ist, der Luft in der Luftstrommenge, die für die vollkommene Verbrennung erforderlich ist, der Zirkulationseinheit (2) zugeführt wird, und eine verbleibende Menge der Luft in der Luftstrommenge, die für die vollkommene Verbrennung erforderlich ist, der Nachverbrennungseinheit (3) zugeführt wird.

2. Mehrschichtiger Zirkulationstyp-Ofen gemäß Anspruch 1, wobei bei der zweiten Steuerung der mehrschichtige Zirkulationstyp-Ofen für Folgendes ausgelegt ist:
Steuern der Zufuhr einer Luft, die gleich der minimalen Luftstrommenge ist, die für ein Zirkulieren des strömenden Mediums in der Zirkulationseinheit (2) erforderlich ist, der Luft in der Luftstrommenge, die für die vollkommene Verbrennung erforderlich ist, die der Zirkulationseinheit (2) zugeführt wird, und Zuführen einer verbleibenden Menge der Luft in der Luftstrommenge, die für die vollkommene Verbrennung erforderlich ist, in die Nachverbrennungseinheit (3).

3. Mehrschichtiger Zirkulationstyp-Ofen gemäß Anspruch 1 oder 2, wobei der mehrschichtige Zirkulationstyp-Ofen für Folgendes ausgelegt ist:
bei der ersten Steuerung
in der Zirkulationseinheit Durchführen einer eingeschränkten Verbrennung, um eine Brennstoffverbrauchsmenge pro Einheit Veraschungsmenge des Schlamms bei einem konstanten Wert zu steuern, wobei ein Primärluftverhältnis niedriger als Eins ist, und die Primärluft der Zirkulationseinheit zugeführt wird, und
Durchführen einer vollkommenen Verbrennung, um der Nachverbrennungseinheit eine Sekundärluft und eine Tertiärluft zuzuführen, um ein thermisches Zersetzungsgas aus der Zirkulationseinheit weiter zu veraschen,
bei der zweiten Steuerung
in der Zirkulationseinheit Steuern der Brennstoffverbrauchsmenge pro Einheit Veraschungsmenge des Schlamms auf denselben Wert wie denjenigen der ersten Steuerung hin, wobei das Primärluftverhältnis allmählich auf einen Wert eines Gesamtluftverhältnisses des gesamten mehrschichtigen Zirkulationstyp-Ofens gemeinsam mit einer Verringerung der Veraschungsmenge des der Zirkulationseinheit pro Einheitszeit zugeführten Schlamms erhöht wird, und
in der Nachverbrennungseinheit allmähliches Verringern des Sekundärluftverhältnisses und des Tertiärluftverhältnisses auf einen Wert von Null, gemeinsam mit einer Verringerung der Veraschungsmenge des der Zirkulationseinheit pro Einheitszeit zugeführten Schlamms.

## Revendications

1. Four multicouche du type circulant comprenant :
une unité de circulation (2) adaptée à incinérer un dépôt tout en fournissant un air faisant circuler un milieu fluide ;
une unité de post-combustion (3) adaptée à fournir un air à un gaz de décomposition thermique à partir de l'unité de circulation (2) pour réaliser une combustion complète, dans lequel
le four multicouche du type circulant (1) est adapté à :
réaliser une première commande dans laquelle un air dans une quantité d'écoulement d'air requise pour la combustion complète et correspondant à une quantité de dépôt injectée est fourni à l'unité de circulation (2) et à l'unité de post-combustion (3) séparément selon un rapport prédéterminé, dans lequel
le four multicouche du type circulant (1) est adapté à :
réaliser une seconde commande dans laquelle, dans un cas où une quantité d'écoulement de l'air devant être fourni à l'unité de circulation (2) est inférieure à une quantité d'écoulement d'air requise pour la circulation du milieu fluide dans la première commande, un air égal ou supérieur à une quantité d'écoulement d'air minimale requise pour la circulation du milieu fluide dans l'unité de circulation (2), de l'air dans la quantité d'écoulement d'air requise pour la combustion complète est fourni à l'unité de circulation (2) et une quantité restante de l'air dans la quantité d'écoulement d'air requise pour la combustion complète est fournie à l'unité de post-combustion (3).

2. Four multicouche du type circulant selon la revendication 1, dans lequel dans la seconde commande, le four multicouche du type circulant est adapté à :
commander la fourniture d'un air égal à la quantité d'écoulement d'air minimale requise pour la circulation du milieu fluide dans l'unité de circulation (2), de l'air dans la quantité d'écoulement d'air requise pour la combustion complète fourni à l'unité de circulation (2), et pour fournir une quantité restante de l'air dans la quantité d'écoulement d'air requise pour la combustion complète à l'unité de post-combustion (3).

3. Four multicouche du type circulant selon la revendication 1 ou 2, dans lequel le four multicouche du type circulant est adapté à,
dans la première commande,
dans l'unité de circulation, réaliser une combustion limitée pour commander une quantité de consommation de carburant par unité de quantité d'incinération du dépôt à une valeur constante, un rapport d'air primaire étant inférieur à un, l'air primaire étant fourni à l'unité de circulation, et
réaliser une combustion complète pour fournir un air secondaire et un air tertiaire à l'unité de post-combustion pour incinérer davantage un gaz de décomposition thermique provenant de l'unité de circulation,
dans la seconde commande,
dans l'unité de circulation, commander la quantité de consommation de carburant par unité de quantité d'incinération du dépôt à la même valeur que celle de la première commande, le rapport d'air primaire étant augmenté progressivement à une valeur d'un rapport d'air total du four multicouche du type circulant dans sa totalité conjointement avec une réduction de la quantité d'incinération du dépôt fourni à l'unité de circulation par unité de temps, et
dans l'unité de post-combustion, réduire progressivement le rapport d'air secondaire et le rapport d'air tertiaire à une valeur de zéro conjointement avec une réduction de la quantité d'incinération du dépôt fourni à l'unité de circulation par unité de temps.
